# EUROPEAN PATENT SPECIFICATION

(11) **EP 2 042 631 B1**
(45) Date of publication and mention of the grant of the patent: **16.11.2011**
(21) Application number: 07768322.5
(22) Date of filing: 06.07.2007
(51) Int. Cl.: D04B 35/00, A41H 43/00, G06F 17/50, D04B 37/00

(54) **SIMULATION DEVICE, SIMULATION METHOD AND SIMULATION PROGRAM OF TUBULAR FABRIC**
SIMULATIONSVORRICHTUNG, SIMULATIONSVERFAHREN UND SIMULATIONSPROGRAMM FÜR SCHLAUCHWARE
DISPOSITIF DE SIMULATION, PROCÉDÉ DE SIMULATION ET PROGRAMME DE SIMULATION DE TISSU TUBULAIRE

(30) Priority: 11.07.2006 JP 2006190057
(43) Date of publication of application: 01.04.2009
(73) Proprietor: Shima Seiki Manufacturing., Ltd., Wakayama-shi, Wakayama 6410003 (JP)
(72) Inventor: TERAI, Koichi, Wakayama-shi, Wakayama 641-0003 (JP)
(74) Representative: Wagner, Karl H.
(86) International application number: PCT/JP2007/063593
(87) International publication number: WO 2008/007623

(56) References cited:
- WO-A1-2004/022828
- WO-A1-2005/082186
- JP-B2- 2 913 267

## Description

### TECHNICAL FIELD

The present invention relates to a simulation of a tubular fabric, and particularly to a simulation of a tubular fabric of which face and back are inverted.

### BACKGROUND

The inventor has proposed a three-dimensional simulation of a tubular fabric (Patent Document 1 W02005/082186). In other words, the stitch arrangement on knitting data is initially transformed to approach a natural arrangement to generate a three-dimensional image of a tubular fabric. Next, the generated three-dimensional image is transformed such that it is worn by a human body, to simulate a state in which a person wears the tubular fabric.

Incidentally, it is convenient to simulate a state in which the back of the tubular fabric, that is, the face and back of the fabric are inverted so that the inside of the tube is exposed to the outside. For example, in the design of a reversible tubular fabric which can be worn with either side facing out, it is important to evaluate the design of the back of the tube using a simulation image. Moreover, in the design of a jacquard or an intarsia jacquard where many prolongations are generated on the back of the tubular fabric due to an miss-stitch operation, it is preferred to evaluate the condition of the prolongations. For example, if excessively long prolongations are present on the inside of a glove or sweater, fingers or buttons might be entangled by the prolongation.

Related conventional arts such as Patent Document 2 (Japanese Patent Application Publication No. H9-78411) and Patent Document 3 (WO2004/022828) describe the design of a tubular fabric in which the design of a front fabric is right/left inverted and copied to a rear fabric. Patent Document 2 further discloses designing the rear fabric while viewing it from a rear bed side behind the tubular fabric, and then right/left inverting the stitch positions of the rear fabric so that the types and directions of the stitches are inverted, and thereby obtaining knitting data of the rear fabric. Patent Document 2, however, does not consider a. simulation of the tubular fabric of which face and back are inverted. Furthermore, because Patent Document 1 simulates the tubular fabric using a three-dimensional image, the inside of the tube can be seen from the openings of the neck and sleeves. However, this invention is not to display the inside by inverting the face and back of the tubular fabric.

### DISCLOSURE OF THE INVENTION

An object of the present invention is to obtain a simulation image of a tubular fabric of which face and back are inverted.
This object is solved by a simulation device having the features as set forth in claim 1. Preferred embodiments of this simulation device are stated in the subclaims 2 to 4. The object is also met by a simulation program according to claim 9. A preferred embodiment of this program is stated in subclaim 10.

The present invention is a simulation device of a tubular fabric for simulating a fabric obtained by connecting a front fabric and a rear fabric into a tube, on the basis of knitting data of the front fabric and the rear fabric, the simulation device comprising: front/rear attribute inverting means for inverting a front/rear relation between the front fabric and the rear fabric in the knitting data; simulation image generating means for generating a simulation image of the fabric on the basis of the knitting data obtained after inverting the attributes of the front fabric and the rear fabric; viewpoint shifting means for shifting a viewpoint to the simulation image by 180°; and display means for displaying on a monitor the simulation image obtained after viewpoint shifting, as an image in which the face and back of the tubular fabric are inverted.

The present invention is also a simulation method of a tubular fabric for simulating a fabric obtained by connecting a front fabric and a rear fabric into a tube, on the basis of knitting data of the front fabric and the rear fabric, the simulation method comprising the steps of: inverting attributes of a front/rear relation between the front fabric and the rear fabric in the knitting data; generating a simulation image of the fabric on the basis of the knitting data obtained after inverting the attributes of the front fabric and the rear fabric; shifting a viewpoint to the generated simulation image by 180°; and displaying on a monitor the simulation image obtained after viewpoint shifting, as an image in which the face and back of the tubular fabric are inverted.

The present invention is also a simulation program of a tubular fabric for simulating a fabric obtained by connecting a front fabric and a rear fabric into a tube, on the basis of knitting data of the front fabric and the rear fabric, the simulation program comprising: a front/rear attribute inversion instruction for inverting a front/rear relation between the front fabric and the rear fabric in the knitting data; a simulation image generating instruction for generating a simulation image of the fabric on the basis of the knitting data obtained after inverting the attributes of the front fabric and the rear fabric; a viewpoint shifting instruction for shifting a viewpoint to the generated simulation image by 180°; and a display instruction for displaying on a monitor the simulation image obtained after viewpoint shifting, as an image in which the face and back of the tubular fabric are inverted.

Preferably, a three-dimensional simulation image is generated as the simulation image in which the face and back of the tubular fabric are inverted.
More preferably, the simulation device displays on the monitor in parallel the simulation image in which the face and back of the tubular fabric are inverted and a simulation image in which the face and back of the tubular fabric are not inverted, and has a manual input that a user uses for accessing either one of the simulation images on the monitor to change a design of the tubular fabric, changes the knitting data of the tubular fabric in accordance with the design change performed by means of the manual input, and redisplays on the monitor the simulation image in which the face and back of the tubular fabric are inverted and the simulation image in which the face and back of the tubular fabric are not inverted, on the basis of the changed knitting data.
Preferably, the simulation device detects a section in which the length of a prolongation of the tubular fabric exceeds a predetermined value, and displays the section in which the length of the prolongation exceeds the predetermined value, on the simulation image in which the face and back of the tubular fabric are inverted.

The description about the simulation device on this specification directly corresponds to the simulation method and simulation program, unless otherwise specified. On the other hand, the description about the simulation method corresponds to the simulation device and simulation program, unless otherwise specified.
In this specification, the course direction of the fabric is referred to as "right/left direction" or "width direction," and the wale direction perpendicular to a course "vertical direction."

In the knitting data of the tubular fabric, which has front/rear fabric attributes (relation), the fabric with the front attribute exists in front of the fabric with the rear attribute. The front means, for example, the front of a flat knitting machine, and the rear means the back of the knitting machine. Because the front fabric is placed behind the rear fabric by inverting the front and rear fabric attributes, the face and back of the front fabric are inverted. Similarly, because the rear fabric is placed in front of the front fabric, the face and back of the rear fabric are inverted. Therefore, when the finished tubular fabric is simulated with respect to the knitting data in which the front and rear fabric attributes are inverted, it is possible to obtain an image in which the face and back of the tubular fabric are inverted, i.e., an image in which the inside of the tube is exposed and the outside is hidden inside.

In this simulation image, the front and rear sides of the tubular fabric are inverted because the rear fabric is placed in front and the front fabric. When the viewpoint to the simulation image is inverted 180°, the front fabric comes in front of the tube and the rear fabric behind the tube, whereby the front and rear of the tubular fabric are corrected. In this manner described above, the present invention can simply simulate the state in which the face and back of the tubular fabric are inverted. Although the simulation image may be a two-dimensional image, in this case a connecting part between the front and rear fabrics is difficult to see and cannot be seen from any viewpoint. In a three-dimensional image, however, the viewpoint can be shifted easily so that the connecting part and the like between the front and rear fabrics can be seen easily.

When inverting the face and back of the tubular fabric, the simulation image of the fabric of which front and rear are not inverted can be created three-dimensionally. Then, the three-dimensional image can be transformed so as to pull the inside of the tube out and especially invert the face and back of a sweater, a dress, a glove, or the like using a human hand. However, it is difficult to move the stitches on the three-dimensional image in the same way that a human hand is used to invert the face and back of the fabric. At least such an algorithm capable of executing this process in real time is not known.

If the face and back of the tubular fabric can be inverted and simulated, it becomes possible to check the designs of both the face side and the back side of a reversible fabric, i.e., a fabric that can be worn with either side facing out. Moreover, the condition of a prolongation disposed on the back of a jacquard fabric or intarsia jacquard fabric can be checked, and problems caused when worn can be identified. In addition, the condition of the borderline between the front and rear fabrics can be checked from the back side.

An image in which the face side is simulated and an image in which the back side is simulated are displayed in parallel on the monitor. The tubular fabric can be designed while modifying one of the fabrics and the other one in real time and simultaneously checking the front side and the back side of the tubular fabric.
If the prolongation on the back side is long, fingers might be entangled by it when wearing the tubular fabric. However, such a problem can be solved by detecting a prolongation position of at least a predetermined length and displaying the detected section on a simulation of the back side.

### BRIEF DESCRIPTION OF THE DRAWINGS

FIG. 1 is a block diagram of a knit simulation device of an embodiment;
FIG. 2 is a diagram showing face/back inversion according to the embodiment, wherein 1) schematically shows knitting of a tubular fabric of which face and back are not inverted, 2) shows the tubular fabric that is knitted when the front and rear fabric attributes are inverted, 3) shows how the tubular fabric of which front and rear fabric attributes are inverted is simulated using a three-dimensional image, and how the viewpoint is shifted by 180°, and 4) schematically shows a simulation image of the tubular fabric of which face and back are inverted;
FIG. 3 is a diagram showing how knitting data is changed as the face and back of the tubular fabric are inverted in the embodiment;
FIG. 4 is a flowchart showing a knit design method of the embodiment;
FIG. 5 is a flowchart showing a viewpoint changing algorithm of the embodiment;
FIG. 6 is a flowchart showing a zoom algorithm of the embodiment;
FIG. 7 is a flowchart showing a design correction algorithm of the embodiment;
FIG. 8 is a flowchart showing an algorithm for checking a prolongation according to the embodiment;
FIG. 9 is a block diagram showing a knit design program according to the embodiment;
FIG. 10 is a diagram showing face and back two simulation images of a garment according to the embodiment;
FIG. 11 is a diagram showing face and back two simulation images of a glove according to the embodiment; and
FIG. 12 is a schematic diagram showing how two images, the face and back, are displayed and data is changed, according to the embodiment.

### EXPLANATION OF REFERENCE NUMERALS

- 2: Knit simulation device
- 4: Bus
- 6: Stylus
- 8: Color monitor
- 10: Keyboard
- 12: Disk drive
- 14: LAN interface
- 16: Color printer
- 18: Library
- 20: Tool storage unit
- 22: Back checking unit
- 24: Knitting data storage unit
- 26, 28: Three-dimensional simulation image storage unit
- 30: Face/back inversion unit
- 32: Three-dimensional simulation unit
- 33: Viewpoint changing unit
- 34: Zooming unit
- 36: Design changing unit
- 40: Front bed
- 41: Rear bed
- 42: Carriage
- 44: Tubular fabric
- 45: Front fabric
- 46: Rear fabric
- 47,48: Mark
- 51: Front fabric after attribute inversion
- 52: Rear fabric after attribute inversion
- 54, 64: Three-dimensional simulation image
- 56: Central axis
- 58: Neck hole
- 60, 62: Sleeve
- 90: Knit design program
- 91: Design editing instruction
- 92: Face/back inversion instruction
- 93: Three-dimensional loop simulation instruction
- 94: Viewpoint changing instruction
- 95.: Zooming instruction
- 96: Design changing instruction
- 97: Prolongation checking instruction
- 100, 102: Simulation image
- 104 to 106: Connecting part
- 110, 112: Simulation image
- 113: Central axis
- 114: Prolongation
- 120, 125: Display
- 122, 126: Face side display
- 123, 127: Back side display

### BEST MODE FOR CARRYING OUT THE INVENTION

The best mode for carrying out the present invention is described hereinafter, but the present invention is not limited to this best mode.

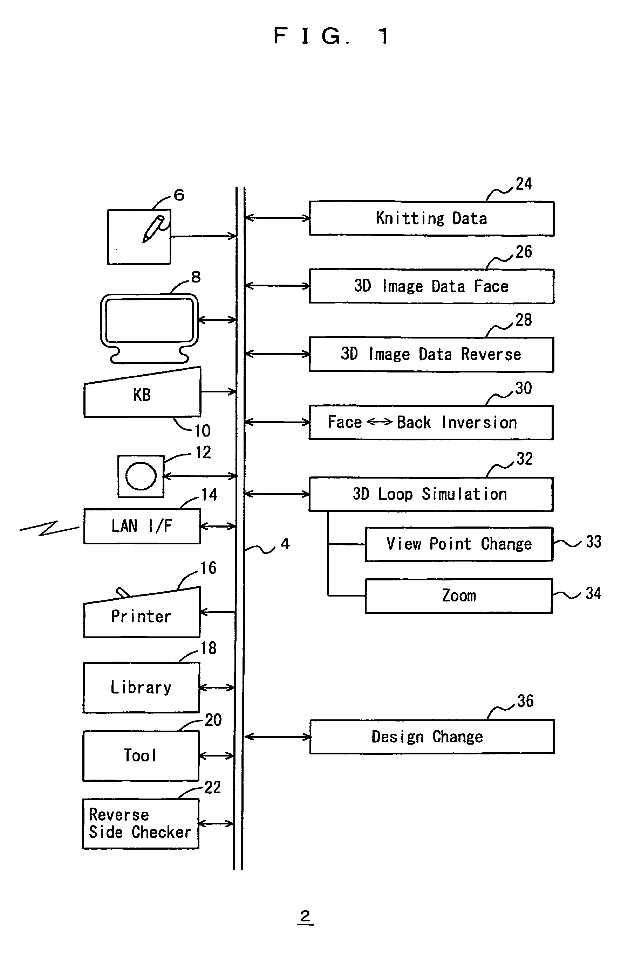

FIGS. 1 to 12 show a knit simulation device 2 of an embodiment and its operation. The knit simulation device 2 is provided with a bus 4, a stylus 6 with which the user manually inputs a design of a tubular fabric, a color monitor 8 for displaying design data and simulation images, and a keyboard 10. A disk drive 12 reads and writes data exchanged with a disk. A LAN interface 14 communicates the data with a LAN, not shown. A color printer 16 is for color-printing the design data and simulation images. A library 18 is for storing libraries of the design data and knitting data. A tool storage unit 20 is for storing a tool necessary for converting the design of the tubular fabric or the design data into the knitting data. A back checking unit 22 is for checking whether the back of the tubular fabric has a section where the length of as prolongation exceeds a predetermined value.

A knitting data storage unit 24 stores the knitting data corresponding to then design data. A three-dimensional simulation image storage unit 26 stores a stimulation image in which the tubular fabric is viewed from its face side. A three-dimensional simulation image storage unit 28 stores a simulation image in which the tubular fabric is viewed from its back. A face/back inversion unit 30 inverts the front and rear fabric attributes with respect to the knitting data of the tubular fabric by applying the front fabric attribute to the rear fabric and the rear fabric attribute to the front fabric.

A three-dimensional simulation unit 32 generates a three-dimensional simulation image using the knitting data of the tubular fabric that is stored in the knitting data storage unit 24. The three-dimensional simulation unit 32 also generates a three-dimensional simulation image similarly for the knitting data in which the front and rear fabric attributes are inverted by the face/back inversion unit 30. A viewpoint changing unit 33 changes a viewpoint to each three-dimensional simulation image. A zooming unit 34 scales the simulation image up or down at a specified magnification, with respect to a zoom center. A design changing unit 36 changes the knitting data when the design of the tubular fabric is changed on the color monitor 8. The design changing unit 36 then processes the changed knitting data by means of the face/back inversion unit 30 to generate a new simulation image by means of the three-dimensional simulation unit 32.

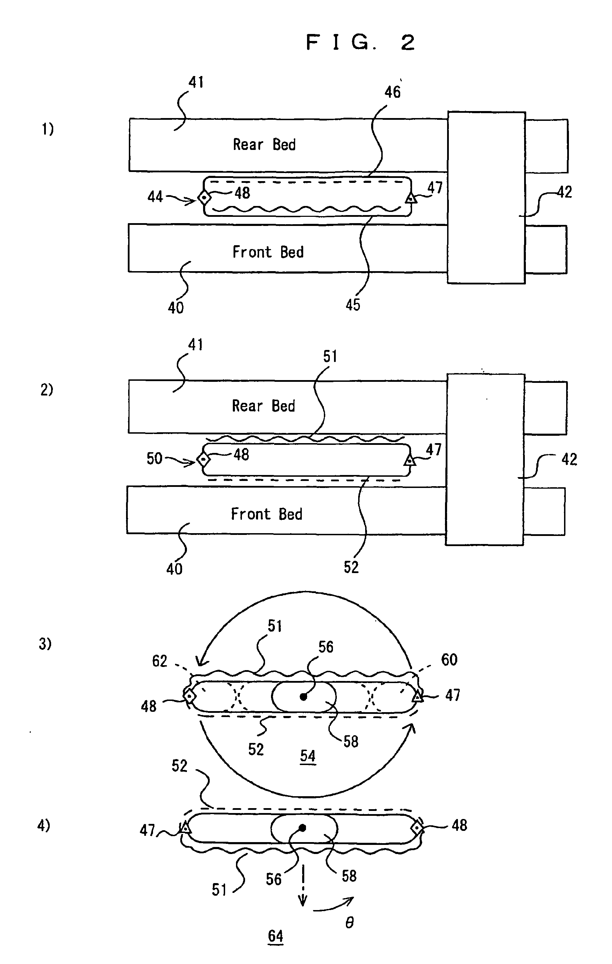

FIG. 2 shows the principle of face/back inversion according to the embodiment. Suppose there is a flat knitting machine having two or four beds. Reference numeral 40 represents a front bed, 41 a rear bed, and 42 a carriage. Reference numeral 45 represents a front fabric and 46 a rear fabric with respect to a tubular fabric 44. Reference numerals 47, 48 are virtual marks representing the borderlines between the front and rear fabrics. Moreover, the face and back of the fabric are shown by the dashed lines and the wavy lines in the drawing. Each of the fabrics 45, 46 has knitting data and front or rear fabric attribute. The fabric 45 having the front fabric attribute is placed closer to the front bed 40 than the fabric 46 having the rear fabric attribute. In the knitting data of each of the fabrics 45, 46, the type of the fabric and the right/left sides of the fabric are defined based on the viewpoint where the fabrics 45, 46 are viewed from the front bed 40 side. For example, a face stitch on the knitting data of the rear fabric 46 is a face stitch when viewed from the front bed 40 side, but is a back stitch when viewed from the rear bed 41 side. Note that a face stitch of the front fabric 45 is knitted by the front bed 40, while a back stitch of the same is knitted by the rear bed 41. The face stitch of the rear fabric 46 is knitted by the rear bed 41, while the back stitch of the same is knitted by the front bed 40. The right side and the left side of the fabric 46 correspond to the right side and the left side of the front bed 40 and are inverted when the fabric 46 is viewed from the rear bed 41 side. When stitches are overlapped due to tucking, miss, or overlapping stitches, the upper/lower relation between the overlapping stitches is described in the knitting data when the fabric 46 is viewed from the front bed 40 side. Therefore, the upper/lower relation between the overlapping stitches is inverted when the fabric is viewed from the rear bed 41 side.

The front and rear attributes are inverted in relation to the fabrics 45, 46. Reference numeral 51 represents the original front fabric after its attribute is inverted, 52 the original rear fabric after its attribute is inverted, and 50 a tubular fabric obtained after its face and back are inverted. The fabric 50 is knitted in the manner shown in 2) of FIG. 2, wherein the face and back of each of the fabrics 51, 52 are inverted. Note that the positions of the marks 47, 48 are not changed. The stitch that is considered as the back stitch of the fabric 46 according to the knitting data is a face stitch when viewed from the rear bed 41 side, and thus is a face stitch in terms of the design. In the fabric 52 in which the front/rear attributes of the fabric 46 are inverted, the same stitch is a back stitch in terms of the design when viewed from the front bed 40 side. The type of a stitch is inverted in the design, as described above. Similarly, the upper/lower relation between overlapping stitches is also inverted.

3) of FIG. 2 shows a three-dimensional simulation image 54 created with respect to the knitting data in which the front and rear fabric attributes are inverted. Reference numeral 56 represents a central axis of the fabric, which is directed in a vertical direction. Reference numeral 58 represents a neck hole. Reference numerals 60, 62 represent sleeves. The tubular fabric is viewed from the rear fabric side in the three-dimensional simulation image 54, and shifting the viewpoint by 180° with respect to the central axis 56 changes this image to an image shown in 4) of FIG. 2 where the tubular fabric is viewed from the front fabric side, thereby a three-dimensional simulation image 64, in which the face and back of the tubular fabric before its attribute are inverted, can be obtained. The coordinate of a height direction disposed along the central axis 56 is represented by z, and a viewpoint direction viewed from a surface of the front fabric is represented by θ.

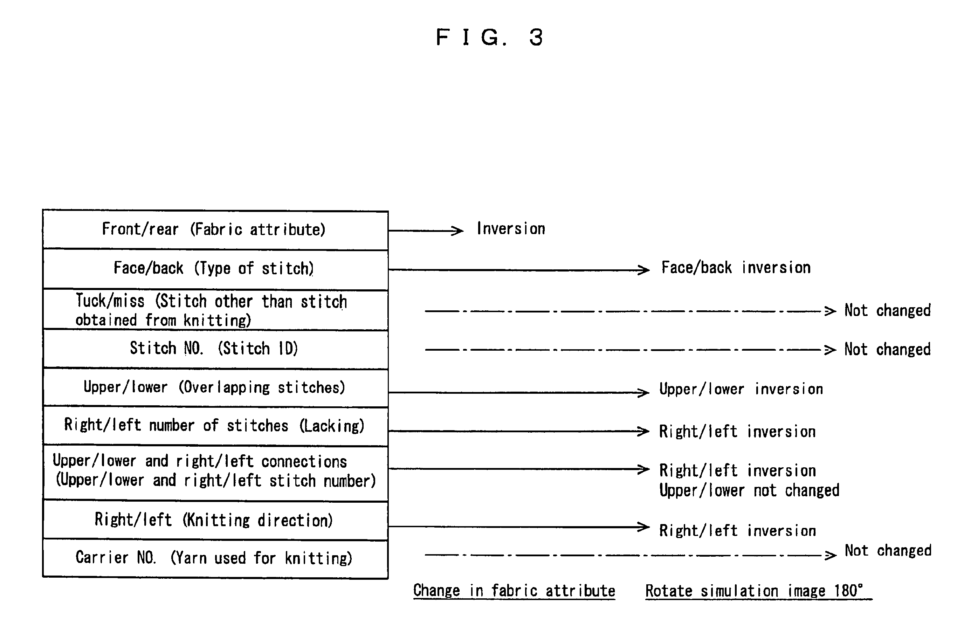

FIG. 3 shows how the knitting data is changed in the processing shown in FIG. 2. The knitting data includes the front and rear fabric attributes and face and back stitch types. In addition, the types of stitches include tuck stitch/miss stitch other than stitches obtained from knitting. Each stitch has a stitch number in the form of an ID. When a normal stitch is overlapped on top of a miss stitch, a plurality of stitches are overlapped. Therefore, upper/lower is added as the data. When three or more stitches are overlapped, the overlapping stitches are expressed in upper/middle/lower, or the like. When there is a swinging stitch, the swinging direction is represented by right/left and the number of swinging stitches is represented by a numeral, such as 1 and 2. Because each stitch is connected to an upper, lower, right or left stitch, the upper, lower, right or left stitch is specified by the stitch number. In addition, the knitting direction of each stitch is represented by left/right, and a carrier number is allocated thereto as data representing yam used for knitting. This data is specified based on the fact that the rear fabric or front fabric is viewed from the front bed side.

By changing the fabric attributes, the data indicating the front fabric or the rear fabric is changed. A three-dimensional simulation image is created for the knitting data in which the front or rear fabric attribute is changed. When the viewpoint is rotated 180° with respect to the central axis 56, not only the types of stitches but also the upper/lower relation between the overlapping stitches, the swinging direction or a right/left connection direction, and a right/left knitting direction are inverted. However, an upper/lower connection direction does not change. In the case of writing the knitting data for the rear fabric while viewing it from the rear bed side, the types of the stitches, the upper/lower relation between the overlapping stitches, the swinging direction, the right/left connection relation between the stitches, the right/left knitting direction are inverted when inverting the fabric attributes of the front and rear fabrics.

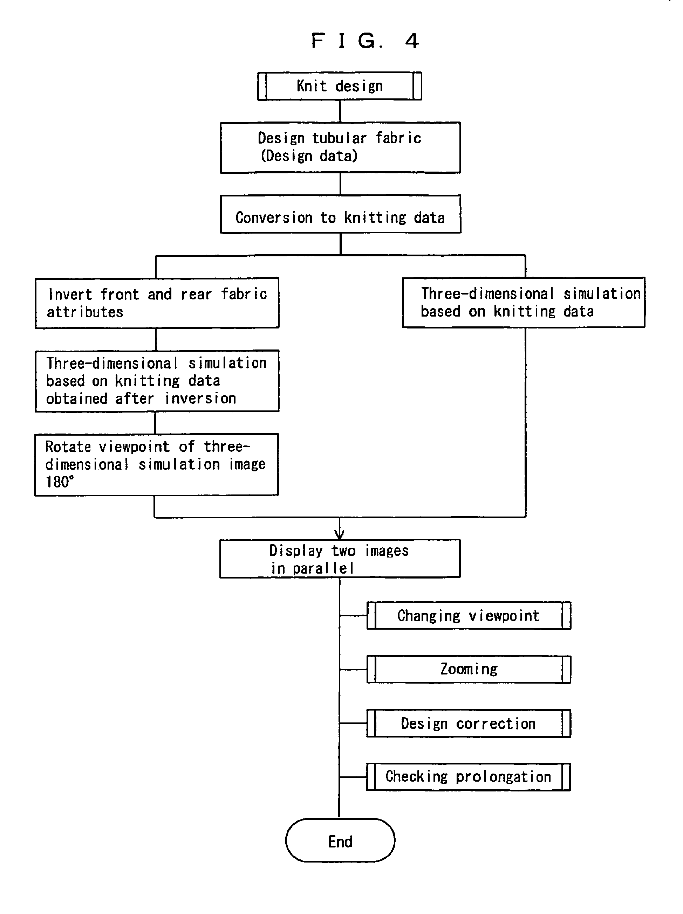

FIG. 4 shows a knit design method of the embodiment. The tubular fabric is designed using the monitor 8 and stylus 6, and the data obtained at this stage is taken as the design data. The design data is converted into the knitting data, but in the simulation where the face and back of the fabric are not inverted the knitting data is directly used to generate a three-dimensional simulation image. In the simulation where the face and back of the fabric are inverted, the front and rear fabric attributes are inverted, and a three-dimensional simulation image is generated based on the inverted knitting data, to rotate the viewpoint 180°. The obtained two three-dimensional simulation images are displayed in parallel on the monitor 8.

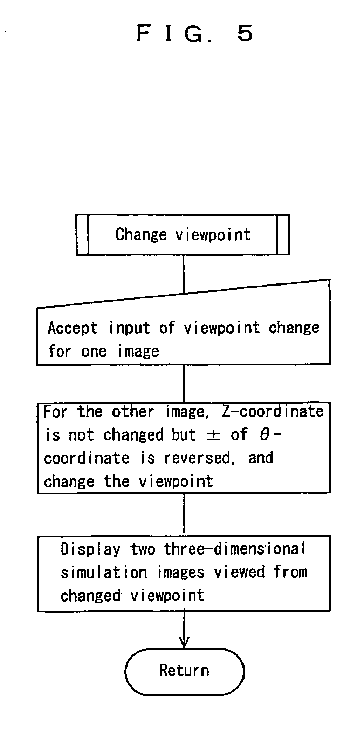

Additional processings include changing the viewpoint, zooming, design correction, and checking a prolongation. As shown in FIG. 5, when changing the viewpoint, a viewpoint changing input is accepted for one of the two simulation images. For the other image, the z-coordinate is changed similarly and the positive side and the negative side of the θ-coordinate are reversed, whereby the viewpoint is changed in two images. With regard to the direction in which the viewpoint is changed, the height direction is the same but the positive side and the negative side of the 0 direction are reversed. The two three-dimensional simulation images that are obtained after changing the viewpoint are displayed in parallel on the monitor.

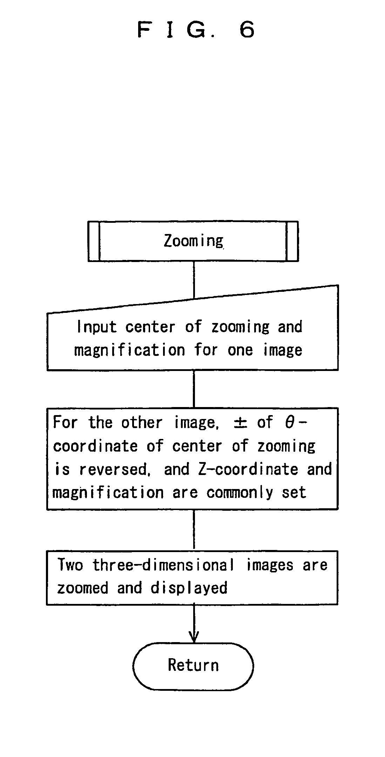

As shown in FIG. 6, the user inputs the center of zooming and the magnification for one of the two simulation images. On the other image, the z-coordinate of the center of zooming and the magnification are the same, and the positive side and the negative side of the θ-coordinate of the center of zooming are inverted. Thereafter, the two three-dimensional simulation images are zoomed and displayed.

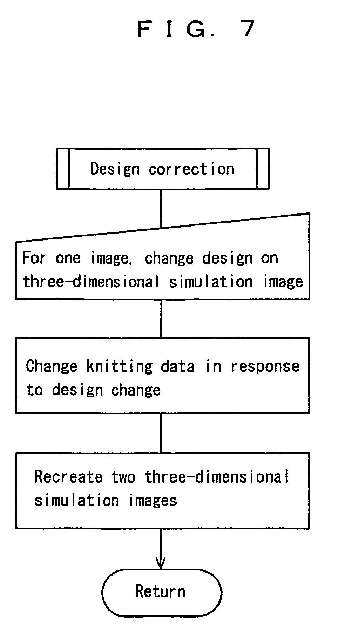

As shown in FIG. 7, when correcting the design, a design change is input from the manual input such as the stylus to one of the two simulation images. The knitting data is changed in accordance with the design change, to recreate two three-dimensional simulation images. Here, the knitting data that is corrected in accordance with the design change is, for example, the data in which the face and back are not inverted, but it may be the data in which the face and back are inverted. In order to convert the knitting data in which the face and back are not inverted from the simulation image in which the face and back are inverted, the design change performed by the user on the simulation image is converted to correction to the knitting data in which the face and back are not inverted, by inverting the types of the stitches, upper/lower relation between the overlapping stitches, and right/left relation in the swinging direction and the knitting direction.

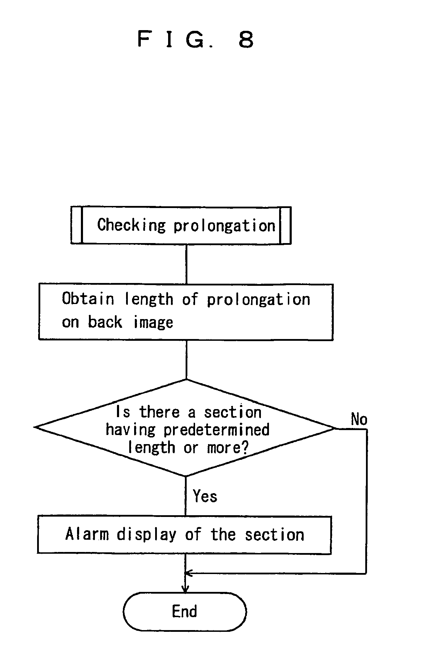

FIG. 8 shows an algorithm for checking a prolongation. The length of a prolongation is obtained with respect to a back image in which the face and back of the tubular fabric are inverted. If the image has a section where the length of the prolongation exceeds predetermined length, for example, the color of this section is changed or a mark is placed around the periphery of this section to display an alarm on the color monitor.

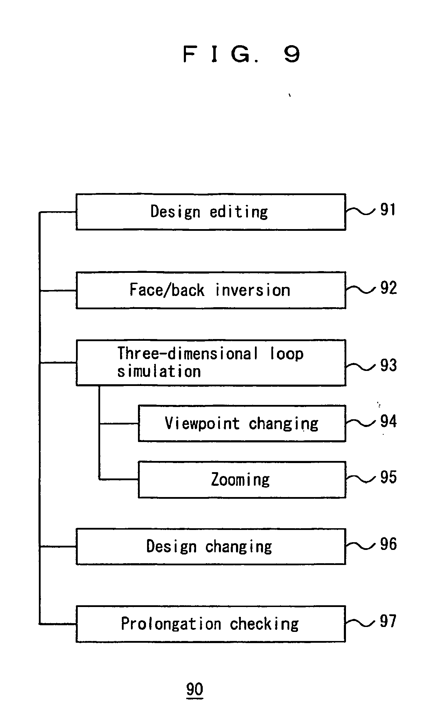

FIG. 9 shows a knit design program 90 of the embodiment. Reference numeral 91 represents a design editing instruction with which the user edits the input design and convert the edited design into the knitting data. A face/back inversion instruction 92 is for inverting the front/rear attributes of the fabric in the knitting data. A three-dimensional loop simulation instruction 93 is for generating three-dimensional loop simulation images on the knitting data in which the front/rear fabric attributes are not inverted and the knitting data in which the front/rear fabric attributes are inverted. A viewpoint changing instruction 94 is for changing the viewpoint to the three-dimensional simulation images. A zooming instruction 95 is for zooming the simulation images. Although not shown in FIG. 9, there is provided an instruction for displaying the obtained two loop simulation images in parallel on the color monitor at all times. Once the design change is executed on one of the two simulation images, a design changing instruction 96 corrects the knitting data to recreate two loop simulation images. A prolongation checking instruction 97 checks, in the back image, the presence of a prolongation having at least predetermined length. FIGS. 1 to 8 show the detailed processings performed by the instructions 92 to 97.

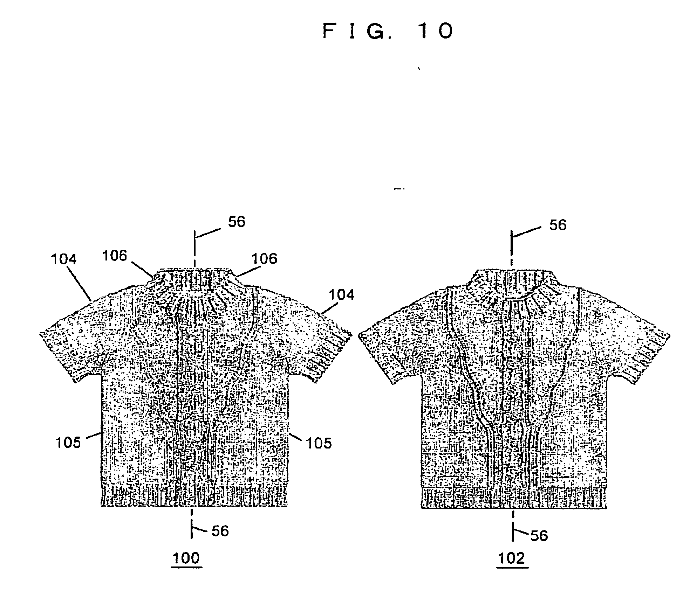

FIG. 10 shows a simulation image 100 of a sweater and a simulation image 102 in which the face and back of the sweater are inverted. Reference numeral 56 represents a central axis of a tubular fabric, and 104 to 106 connecting parts between the front and rear fabrics. The sweater shown in FIG. 10 has a design which can be worn with either side facing out. When displaying the simulation images 100, 102 in parallel on the color monitor 8, the design of the both face and back of the sweater can be seen. This is important in a design of a reversible garment or massage underwear having an important back side or a design of a jacquard in which the condition of a prolongation can be good merchantable quality. Moreover, connections between the front and rear fabrics and the conditions of yarns on the back of the tubular fabric can be observed from the image 102.

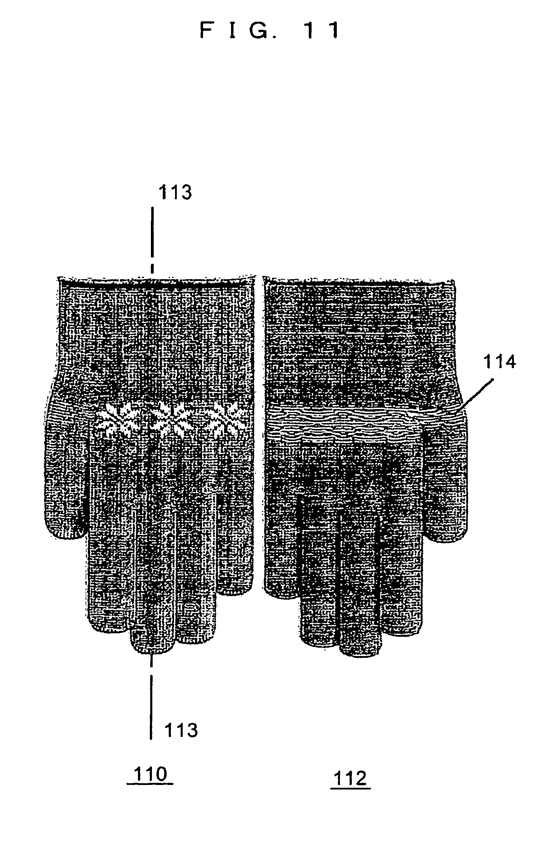

FIG. 11 shows simulation images 110, 112 of the face and back of a glove. Reference numeral 113 represents a central axis of the glove, and 114 a prolongation. Regardless of the glove, if the prolongation 114 is long, then fingers might be entangled by the prolongation when wearing the glove, but the length of the prolongation can be seen from the image 112. Note that the sweater shown in FIG. 10 has a section in which a yarn runs across the back of the fabric in the design of a jacquard or an intarsia jacquard. In this case as well, the length of the prolongation can be confirmed from the image of the back of the fabric.

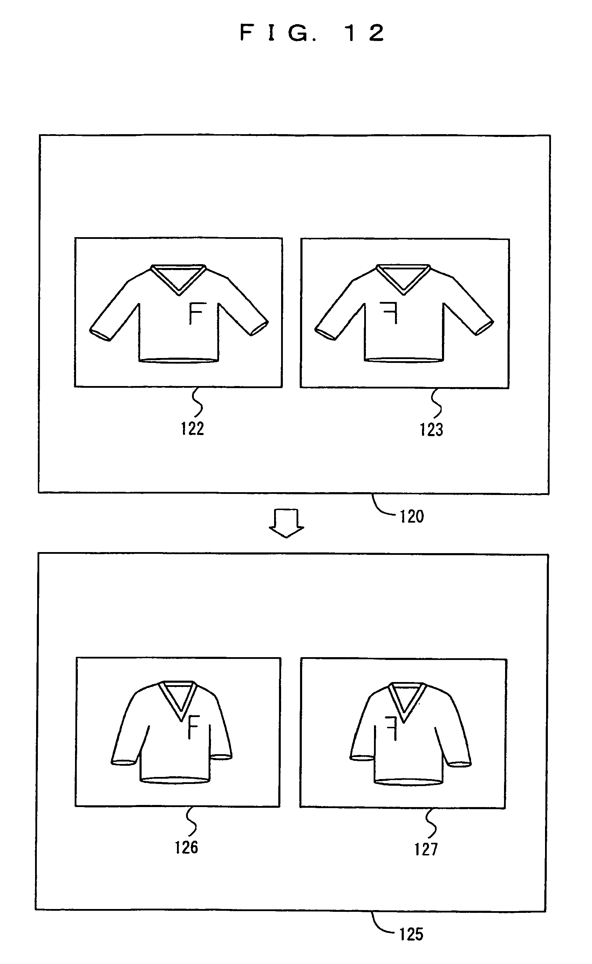

FIG. 12 schematically shows how the images of the face and back of the fabric are displayed on the color monitor 8. A display 120 displays a face side display 122 and a back side display 123 of the tubular fabric in parallel. By correcting these design of either one of the displays 122, 123 using the manual input such as the stylus 6, the knitting data is corrected with respect to the display 122, 123, and, as a result, new face and back side displays 126, 127 are displayed in parallel in a new display 125.

The following effects can be achieved in the embodiment.
(1) The back of the tubular fabric can be simulated easily.
(2) Simulation can be performed without omitting the information on the connecting part between the front and rear fabrics of the tubular fabric.
(3) The tubular fabric can be designed easily due to the above effects, and especially the design or problems of the back side can be checked. For example, the presence of a long prolongation (yarn floating part) can be checked.
(4) The face and back simulation images are displayed in parallel, and the face and back of the tubular fabric can be checked and designed simultaneously in real time such that one of the face and back of the fabric is corrected when the other one is corrected.

## Claims

1. A simulation device (2) of a tubular fabric for simulating a fabric (44) obtained by connecting a front fabric (45) and a rear fabric (46) into a tube, on the basis of knitting data of the front fabric (45) and the rear fabric (46), **characterized in that** the simulation device (2) comprises:
front/rear attribute inverting means for inverting a front/rear relation between the front fabric (45) and the rear fabric (46) in the knitting data;
simulation image generating means for generating a simulation image of the fabric 44 on the basis of the knitting data obtained after inverting the attributes of the front fabric (45) and the rear fabric (46);
viewpoint shifting means for shifting a viewpoint to the simulation image by 180°; and
display means for displaying on a monitor (8) the simulation image obtained after viewpoint shifting, as an image in which the face and back of the tubular fabric (44) are inverted.

2. The simulation device (2) of a tubular fabric according to claim 1, **characterized in that** the simulation image generating means generates a three-dimensional simulation image (54, 64) of the fabric (44).

3. The simulation device of a tubular fabric according to claim 1, **characterized in that** the display means displays on the monitor (8) in parallel a simulation image (102, 112) in which the face and back of the tubular fabric (44) are inverted and a simulation image (100, 110) in which the face and back of the tubular fabric (44) are not inverted, and the simulation device further has a manual input that a user uses for accessing either one of the simulation images (100, 102, 110, 112) on the monitor (8) to change a design of the tubular fabric (44), and means for changing the knitting data of the tubular fabric (44) in accordance with the design change performed by means of the manual input, and redisplays on the monitor 8 the simulation image (102, 112) in which the face and back of the tubular fabric (44) are inverted and the simulation image (100, 110) in which the face and back of the tubular fabric (44) are not inverted, on the basis of the changed knitting data.

4. The simulation device (2) of a tubular fabric according to claim 1, further comprising detection means for detecting a section in which the length of a prolongation (114) of the tubular fabric (44) exceeds a predetermined value, the section in which the length of the prolongation (114) exceeds the predetermined value being displayed on the simulation image (102, 112) in which the face and back of the tubular fabric (44) are inverted.

5. A simulation method of a tubular fabric for simulating a fabric (44) obtained by connecting a front fabric (45) and a rear fabric (46) into a tube, on the basis of knitting data of the front fabric (45) and the rear fabric (46), **characterized in that** the simulation method comprises the steps of:
inverting attributes of a front/rear relation between the front fabric (45) and the rear fabric (46) in the knitting data;
generating a simulation image of the fabric (44) on the basis of the knitting data obtained after inverting the attributes of the front fabric (45) and the rear fabric (46);
shifting a viewpoint to the generated simulation image by 180°; and
displaying on a monitor (8) the simulation image obtained after viewpoint shifting, as an image in which the face and back of the tubular fabric (44) are inverted.

6. The simulation method of a tubular fabric according to claim 5, **characterized in that** a three-dimensional image (54, 64) of the fabric (44) is generated and displayed on the monitor (8) as the simulation image.

7. The simulation method of a tubular fabric according to claim 5, further comprising the steps of:
displaying on the monitor (8) in parallel a simulation image (102, 112) in which the face and back of the tubular fabric (44) are inverted and a simulation image (100, 110) in which the face and back of the tubular fabric (44) are not inverted;
allowing a user to use a manual input for accessing either one of the simulation images (100, 102, 110, 112) on the monitor 8 to accept changing of a design of the tubular fabric (44);
changing the knitting data of the tubular fabric (44) in accordance with the design change performed by means of the manual input; and
redisplaying on the monitor (8) the simulation image (102, 112) in which the face and back of the tubular fabric (44) are inverted and the simulation image (100, 110) in which the face and back of the tubular fabric (44) are not inverted, on the basis of the changed knitting data.

8. The simulation method of a tubular fabric according to claim 5, further comprising the steps of detecting a section in which the length of a prolongation (114) of the tubular fabric (44) exceeds a predetermined value, and displaying the section in which the length of the prolongation (114) exceeds the predetermined value, on the simulation image (102, 112) in which the face and back of the tubular fabric (44) are inverted.

9. A simulation program of a tubular fabric for simulating a fabric (44) obtained by connecting a front fabric (45) and a rear fabric (46) into a tube, on the basis of knitting data of the front fabric (45) and the rear fabric (46), **characterized in that** the simulation program comprises:
a front/rear attribute inversion instruction for inverting attributes of a front/rear relation between the front fabric (45) and the rear fabric (46) in the knitting data;
a simulation image generating instruction for generating a simulation image of the fabric (44) on the basis of the knitting data obtained after inverting the attributes of the front fabric (45) and the rear fabric (46);
a viewpoint shifting instruction (94) for shifting a viewpoint to the generated simulation image by 180°; and
a display instruction for' displaying on a monitor (8) the simulation image obtained after viewpoint shifting, as an image in which the face and back of the tubular fabric (44) are inverted.

10. The simulation program of a tubular fabric according to claim 9, **characterized in that** the display instruction instructs to display on the monitor (8) in parallel a simulation image (102, 112) in which the face and back of the tubular fabric (44) are inverted and a simulation image (100, 110) in which the face and back of the tubular fabric (44) are not inverted, and the simulation program further has an instruction for changing the knitting data of the tubular fabric (44) in accordance with a design change that is performed on the tubular fabric (44) by a user by using a manual input to access either one of the simulation images (100, 102, 110, 112) on the monitor (8), and the simulation image (102, 112) in which the face and back of the tubular fabric (44) are inverted and the simulation image (100, 110) in which the face and back of the tubular fabric (44) are not inverted are redisplayed on the monitor (8) on the basis of the changed knitting data.

## Patentansprüche

1. Simulationsvorrichtung (2) für Schlauchware zum Simulieren eines Gestricks (44), das durch Verbinden eines vorderen Gestricks (45) und eines hinteren Gestricks (46) zu einem Schlauch erhalten wurde, auf der Basis von Strickdaten des vorderen Gestricks (45) und des hinteren Gestricks (46), **dadurch gekennzeichnet, dass** die Simulationsvorrichtung (2) umfasst:
Vorder-/Hinter-Attribute-Invertierungseinrichtung zum Invertieren einer Vorder-/Hinter-Beziehung zwischen dem vorderen Gestrick (45) und dem hinteren Gestrick (46) in den Strickdaten;
Simulationsbild-Erzeugungseinrichtung zum Erzeugen eines Simulationsbilds des Gestricks (44) auf der Basis der Strickdaten, die nach Invertierung der Attribute des vorderen Gestricks (45) und des hinteren Gestricks (46) erhalten wurden;
Sichtpunkt-Verschiebeeinrichtungen zum Verschieben eines Sichtpunkts auf das Simulationsbild um 180°; und
Anzeigeeinrichtung zum Anzeigen des Simulationsbildes auf einem Monitor (8), wobei das Simulationsbild nach Verschieben des Sichtpunkts als ein Bild erhalten wurde, bei dem die Vorderweite und dieRückseite des Schlauches (44) invertiert sind.

2. Simulationsvorrichtung (2) für einen Schlauch gemäß Anspruch 1, **dadurch gekennzeichnet, dass** die Simulationsbilderzeugungseinrichtung ein dreidimensionales Simulationsbild (54, 64) des Gestricks (44) erzeugt.

3. Simulationsvorrichtung (2) für einen Schlauch gemäß Anspruch 1, **dadurch gekennzeichnet, dass** die Anzeigeeinrichtung auf dem Monitor (8) parallel ein Simulationsbild (102, 112), in dem die Vorderseite und die Rückseite des Schlauches (44) invertiert sind, und ein Simulationsbild (100, 110) anzeigt, in dem die Vorder- und Rückseite des Schlauches (44) nicht invertiert sind, wobei die Simulationsvorrichtung (2) weiterhin einen manuellen Zugang, den ein Benutzer für einen Zugriff auf eines der Simulationsbilder (100, 102, 110, 112) auf dem Monitor (8) benutzt, um ein Design des Schlauches (44) zu ändern, sowie Einrichtungen aufweist, um die Strickdaten des Schlauches (44) entsprechend der Entwurfsänderung zu ändern, die mittels der manuellen Eingabe durchgeführt wurde, und Wiederanzeigen auf dem Bildschirm (8) des Simulationsbilds (102, 112), in dem die Vorderseite und die Rückseite des Schlauches (44) invertiert sind, und des Simulationsbilds (100, 110) in dem die Vorderseite und die Rückseite des Gestricks (44) nicht invertiert sind, auf der Basis der geänderten Strickdaten.

4. Simulationsvorrichtung (2) für einen Schlauch gemäß Anspruch 1, weiterhin umfassend Detektionseinrichtungen zum Detektieren eines Abschnitts, in dem die Länge einer Verlängerung (114) des Schlauches (44) einen vorgegebenen Wert überschreitet, wobei der Abschnitt, in dem die Länge der Verlängerung (114) den vorgegebenen Wert überschreitet, der auf dem Simulationsbild (102, 112), in dem die Vorderseite und die Rückseite des Schlauches (44) invertiert sind, angezeigt wird.

5. Simulationsverfahren (2) für Schlauchware zum Simulieren eines Gestricks (44), das durch Verbinden eines vorderen Gestricks (45) und eines hinteren Gestricks (46) zu einem Schlauch erhalten wurde, auf der Basis von Strickdaten des vorderen Gestricks (45) und des hinteren Gestricks (46), **dadurch gekennzeichnet, dass** das Simulationsverfahren umfasst:
Invertieren einer Vorder-/Hinter-Beziehung zwischen dem vorderen Gestrick (45) und dem hinteren Gestrick (46) in den Strickdaten;
Erzeugen eines Simulationsbilds des Gestricks (44) auf der Basis der Strickdaten, die nach Invertierung der Attribute des vorderen Gestricks (45) und des hinteren Gestricks (46) erhalten wurden;
Verschieben eines Sichtpunkts auf das Simulationsbild um 180°; und
Anzeigen des Simulationsbildes auf einem Monitor (8), wobei das Simulationsbild nach Verschieben des Sichtpunkts als ein Bild erhalten wurde, bei dem die Vorder- und Rückseite des Schlauches (44) invertiert sind.

6. Simulationsverfahren für ein Gestrick nach Anspruch 5, **dadurch gekennzeichnet, dass** ein dreidimensionales Bild (54, 64) des Gestricks (44) erzeugt und als Simulationsbild auf dem Monitor (8) angezeigt ist.

7. Simulationsverfahren für einen Schlauch nach Anspruch 5, weiterhin umfassend die Schritte:
Anzeigen auf dem Monitor (8) parallel ein Simulationsbild (102, 112), in dem die Vorderseite und die Rückseite des Schlauches (44) invertiert sind, und eines Simulationsbilds (100, 110), in dem die Vorderseite und die Rückseite des Schlauches nicht invertiert sind;
Ermöglichen der Verwendung eines manuellen Zugangs für einen Benutzer, um auf eines der Simulationsbilder (100, 102, 110, 112) auf dem Monitor (8) zuzugreifen, um ein Ändern eines Entwurfes des Schlauches (44) zu ermöglichen;
Ändern der Strickdaten des Schlauches (44) entsprechend der Entwurfsänderung, die mittels des manuellen Zugangs vorgenommen wurde; und
Wiederanzeigen auf dem Bildschirm (8) des Simulationsbilds (102, 112), in dem die Vorderseite und die Rückseite des Schlauches (44) invertiert sind, und des Simulationsbilds (100, 110), bei dem die Vorderseite und die Rückseite des Schlauches (44) nicht invertiert sind, auf der Basis der geänderten Strickdaten.

8. Simulationsverfahren für Schlauchware nach Anspruch 5, weiterhin umfassend die Schritte des Detektierens eines Abschnitts, in dem die Länge einer Verlängerung (114) der Schlauchware (44) einen vorgegebenen Wert überschreitet, und Anzeigen des Abschnitts, in der die Länge der Verlängerung (114) den vorgegebenen Wert überschreitet, auf dem Simulationsbild (102, 112), in dem die Vorder- und Rückseite der Schlauchware (44) invertiert sind.

9. Simulationsprogramm für Schlauchware zum Simulieren eines Gestricks (44), das durch Verbinden eines vorderen Gestricks (45) und eines hinteren Gestricks (46) zu einem Schlauch erhalten wurde, auf der Basis von Strickdaten des vorderen Gestricks (45) und des hinteren Gestricks (46), **dadurch gekennzeichnet, dass** die Simulationprogramm (2) umfasst:
einen Vorder-/Hinter-Attribute-Invertierungsbefehl zum Invertieren einer Vorder-/Hinter-Beziehung zwischen dem vorderen Gestrick (45) und dem hinteren Gestrick (46) in den Strickdaten;
einen Simulationsbild-Erzeugungsbefehl zum Erzeugen eines Simulationsbilds des Gestricks (44) auf der Basis der Strickdaten, die nach Invertierung der Attribute des vorderen Gestricks (45) und des hinteren Gestricks (46) erhalten wurden;
einen Sichtpunkt-Verschiebe-Befehl (94) zum Verschieben eines Sichtpunkts auf das Simulationsbild um 180°; und
einen Anzeige-Befehl zum Anzeigen des Simulationsbildes auf einem Monitor (8), wobei das Simulationsbild nach Verschieben des Sichtpunkts als ein Bild erhalten wurde, bei dem die Vorderseite und die Rückseite des Schlauches (44) invertiert sind.

10. Simulationsprogramm für einen Schlauch gemäß Anspruch 9, **dadurch gekennzeichnet, dass** der Anzeige-Befehl der Anzeige auf dem Monitor (8) befiehlt, parallel ein Simulationsbild (102, 112), in dem die Vorderseite und die Rückseite des Schlauches (44) invertiert sind, und ein Simulationsbild (100, 110), in dem die Vorderseite und die Rückseite des Schlauches (44) nicht invertiert sind, anzuzeigen, wobei das Simulationsprogramm weiterhin einen Befehl zum Ändern der Strickdaten der Schlauchware (44) entsprechend einer Entwurfsänderung ändert, die von einem Benutzer durch Verwendung einer manuellen Eingabe durchgeführt wurde, um auf eines der Simulationsbilder (100, 102, 110, 112) auf dem Monitor (8) zuzugreifen, und das Simulationsbild (102, 112) in dem die Vorderseite und die Rückseite der Schlauchware (44) invertiert sind, sowie das Simulationsbild (100, 110), in dem die Vorderseite und die Rückseite der Schlauchware (44) nicht invertiert sind, wieder auf dem Monitor (8) auf der Basis der geänderten Strickdaten angezeigt werden.

## Revendications

1. Dispositif de simulation (2) d'un tissu tubulaire pour simuler un tissu (44) obtenu en reliant un tissu avant (45) et un tissu arrière (46) pour obtenir un tube, sur la base de données de tricot du tissu avant (45) et du tissu arrière (46), **caractérisé en ce que** le dispositif de simulation (2) comprend :
des moyens d'inversion d'attributs avant/arrière pour inverser une relation avant/arrière entre le tissu avant (45) et le tissu arrière (46) dans les données de tricot ;
des moyens de génération d'image de simulation pour générer une image de simulation du tissu (44) sur la base des données de tricot obtenues après l'inversion des attributs du tissu avant (45) et du tissu arrière (46) ;
des moyens de décalage de point de vue pour décaler de 180° le point de vue sur l'image de simulation ; et
des moyens d'affichage pour afficher sur un moniteur (8) l'image de simulation obtenue après le décalage de point de vue, sous la forme d'une image dans laquelle le devant et le dos du tissu tubulaire (44) sont inversés.

2. Dispositif de simulation (2) d'un tissu tubulaire selon la revendication 1, **caractérisé en ce que** les moyens de génération d'image de simulation génèrent une image de simulation tridimensionnelle (54, 64) du tissu (44).

3. Dispositif de simulation d'un tissu tubulaire selon la revendication 1, **caractérisé en ce que** les moyens d'affichage affichent sur le moniteur (8) en parallèle une image de simulation (102, 112) dans laquelle le devant et le dos du tissu tubulaire (44) sont inversés et une image de simulation (100, 110) dans laquelle le devant et le dos du tissu tubulaire (44) ne sont pas inversés, et le dispositif de simulation comporte en outre une entrée manuelle que l'utilisateur utilise pour accéder à l'une ou l'autre des images de simulation (100, 102, 110, 112) sur le moniteur (8) pour changer la conception du tissu tubulaire (44), et des moyens pour changer les données de tricot du tissu tubulaire (44) conformément au changement de conception réalisé par les moyens d'entrée manuelle, et réaffiche sur le moniteur 8 l'image de simulation (102, 112) dans laquelle le devant et le dos du tissu tubulaire (44) sont inversés et l'image de simulation (100, 110) dans laquelle le devant et le dos du tissu tubulaire (44) ne sont pas inversés, sur la base des données de tricot changées.

4. Dispositif de simulation (2) d'un tissu tubulaire selon la revendication 1, comprenant en outre des moyens de détection pour détecter une section dans laquelle la longueur d'un prolongement (114) du tissu tubulaire (44) dépasse une valeur prédéterminée, la section dans laquelle la longueur du prolongement (114) dépasse la valeur prédéterminée étant affichée sur l'image de simulation (102, 112) dans laquelle le devant et le dos du tissu tubulaire (44) sont inversés.

5. Procédé de simulation d'un tissu tubulaire pour simuler un tissu (44) obtenu en reliant un tissu avant (45) et un tissu arrière (46) pour obtenir un tube, sur la base de données de tricot du tissu avant (45) et du tissu arrière (46), **caractérisé en ce que** le procédé comprend les étapes suivantes :
inverser une relation avant/arrière entre le tissu avant (45) et le tissu arrière (46) dans les données de tricot ;
générer une image de simulation pour générer une image de simulation du tissu (44) sur la base des données de tricot obtenues après l'inversion des attributs du tissu avant (45) et du tissu arrière (46) ;
décaler de 180° le point de vue sur l'image de simulation ; et
afficher sur un moniteur (8) l'image de simulation obtenue après le décalage de point de vue, sous la forme d'une image dans laquelle le devant et le dos du tissu tubulaire (44) sont inversés.

6. Procédé de simulation d'un tissu tubulaire selon la revendication 5, **caractérisé en ce qu'**une image tridimensionnelle (54, 64) du tissu (44) est générée et affichée sur le moniteur (8) en tant qu'image de simulation.

7. Procédé de simulation d'un tissu tubulaire selon la revendication 5, comprenant en outre les étapes suivantes :
afficher sur le moniteur (8) en parallèle une image de simulation (102, 112) dans laquelle le devant et le dos du tissu tubulaire (44) sont inversés et une image de simulation (100, 110) dans laquelle le devant et le dos du tissu tubulaire (44) ne sont pas inversés ;
permettre à un utilisateur d'utiliser une entrée manuelle pour accéder à l'une ou l'autre des images de simulation (100, 102, 110, 112) sur le moniteur (8) pour accepter un changement de la conception du tissu tubulaire (44) ;
changer les données de tricot du tissu tubulaire (44) conformément au changement de conception réalisé au moyen de l'entrée manuelle ; et
réafficher sur le moniteur (8) l'image de simulation (102, 112) dans laquelle le devant et le dos du tissu tubulaire (44) sont inversés et l'image de simulation (100, 110) dans laquelle le devant et le dos du tissu tubulaire (44) ne sont pas inversés, sur la base des données de tricot changées.

8. Procédé de simulation d'un tissu tubulaire selon la revendication 5, comprenant en outre les étapes consistant à détecter une section dans laquelle la longueur d'un prolongement (114) du tissu tubulaire (44) dépasse une valeur prédéterminée, et à afficher la section dans laquelle la longueur du prolongement (114) dépasse la valeur prédéterminée, sur l'image de simulation (102, 112) dans laquelle le devant et le dos du tissu tubulaire (44) sont inversés.

9. Programme de simulation d'un tissu type tubulaire pour simuler un tissu (44) obtenu en reliant un tissu avant (45) et un tissu arrière (46) pour obtenir un tube, sur la base de données de tricot du tissu avant (45) et du tissu arrière (46), **caractérisé en ce que** le programme de simulation comprend :
une instruction d'inversion d'attributs avant/arrière pour inverser les attributs d'une relation avant/arrière entre le tissu avant (45) et le tissu arrière (46) dans les données de tricot ;
une instruction de génération d'image de simulation pour générer une image de simulation du tissu (44) sur la base des données de tricot obtenues après l'inversion des attributs du tissu avant (45) et du tissu arrière (46) ;
une instruction de décalage de point de vue (94) pour décaler de 180° le point de vue sur l'image de simulation générée, et
une instruction d'affichage pour afficher sur un moniteur (8) l'image de simulation obtenue après le décalage de point de vue, sous forme d'une image dans laquelle le devant et le dos du tissu tubulaire (44) sont inversés.

10. Programme de simulation d'un tissu tubulaire selon la revendication 9, **caractérisé en ce que** l'instruction d'affichage ordonne d'afficher en parallèle sur le moniteur (8) une image de simulation (102, 112) dans laquelle le devant et le dos du tissu tubulaire (44) sont inversés et une image de simulation (100, 110) dans laquelle le devant et le dos du tissu tubulaire (44) ne sont pas inversés, et le programme de simulation comporte en outre une instruction pour changer les données de tricot du tissu tubulaire (44) conformément à un changement de conception qui est réalisé sur le tissu tubulaire (44) par un utilisateur en utilisant une entrée manuelle pour accéder à l'une ou l'autre des images de simulation (100, 102, 110, 112) sur le moniteur (8), et l'image de simulation (102, 112) dans laquelle le devant et le dos du tissu tubulaire (44) sont inversés et l'image de simulation (100, 110) dans laquelle le devant et le dos du tissu tubulaire (44) ne sont pas inversés sont réaffichées sur le moniteur (8) sur la base des données de tricot changées.
